# EUROPÄISCHE PATENTANMELDUNG

(11) **EP 0 997 704 A1**
(43) Veröffentlichungstag der Anmeldung: **03.05.2000**
(21) Anmeldenummer: 99890344.7
(22) Anmeldetag: 27.10.1999
(51) Int. Cl.: G01C 1/04, G01C 11/06

(54) **Theodolit**

(30) Priorität: 27.10.1998 AT 179498
(71) Anmelder: Geodata Ziviltechnikergesellschaft m.b.h., 8700 Leoben (AT)
(72) Erfinder: Chmelina, Klaus, Dipl.-Ing., 1060 Wien (AT); Pollak, Gerald, Dipl.-Ing., 8792 St. Peter Freienstein (AT); Meyer, Christoph, Dipl.-Ing., 8047 Hart bei Graz (AT); Rabensteiner, Klaus, Dipl.-Ing., 8010 Graz (AT)
(74) Vertreter: Müllner, Erwin, Dr.

(57) **Zusammenfassung**

An einem Theodolit (2), der vorzugsweise eine Servo-Totalstation ist, ist zumindest eine Kamera (5) seitlich befestigt, wobei die Kamera (5) gemeinsam mit dem Theodoliten (2) um eine waagrechte (Pfeil 3) und um eine senkrechte Achse (Pfeil 4) schwenkbar ist. Zum Vermessen von Objekten, insbesondere des Streckenausbruchs im Tunnelbau, misst man zunächst mit dem Theodoliten (2) zumindest zwei Zielreflektoren (11,12,13,14), deren Absolutkoordinaten bekannt sind, ein, woraus man die Absolutkoordinaten des Theodoliten (2) und seine Orientierung errechnet. Dann verdreht man den Theodoliten (2) so, dass die Kamera (5) auf das zu vermessende Objekt gerichtet ist. Danach macht man die erste Aufnahme. Schließlich verdreht man den Theodoliten (2) samt Kamera (5) um die senkrechte Achse (Pfeil 4) um 180° und dann um die waagrechte Achse (Pfeil 3) so weit, bis die Kamera (5) wieder in dieselbe Richtung schaut, wonach man die zweite Aufnahme macht. Letztlich wertet man die beiden Aufnahmen gemeinsam aus.

## Beschreibung

Die vorliegende Erfindung betrifft einen Theodoliten, insbesondere in der Ausführung als Servo-Totalstation.

Im Tunnelbau ist eine genaue Vermessung des Streckenausbruchs und auch des Streckenausbaus unumgänglich, und es sind dafür auch schon verschiedene Vorrichtungen und Verfahren vorgeschlagen worden.

Um möglichst viele Punkte eines Objekts in einem Arbeitsgang zu vermessen, kann man zwei fotografische Aufnahmen aus unterschiedlichen Positionen machen und dann die Bilder auswerten (Stereofotografie). Man bekommt dann die Positionen der Punkte des Objekts relativ zu den Kamerapositionen. Zusätzlich müssen aber noch die Kamerapositionen in Absolutkoordinaten ausgemessen werden, damit die Absolutkoordinaten der Punkte des Objektes bestimmt werden können. Da die Bildauswertung sehr gut automatisierbar ist, ist die Ermittlung der Absolutkoordinaten der Kamerapositionen bei dieser Art von Vermessung ein wesentlicher Teil des gesamten Arbeitsaufwandes.

Aus der DE 40 20 035 C1 ist bekannt, gleichzeitig mit der Objektfotografie eine zweite Fotografie zu machen, und zwar mit einer zweiten Kamera, die in Bezug auf die erste Kamera um 180° verdreht ist und mit der ersten Kamera auf einer gemeinsamen optischen Bildachse liegt. Die beiden Kameras werden gleichzeitig ausgelöst, wobei die erste Kamera das zu vermessende Objekt aufnimmt und die zweite Kamera mindestens drei in Absolutkoordinaten vermessene Messpunkte aufnimmt. Dies scheint auf den ersten Blick eine sehr gute Lösung zu sein, weil die Absolutkoordinaten der Kamerapositionen auf Grund der Fotografie der zweiten Kamera vollautomatisch ermittelt werden können. Auf den zweiten Blick erkennt man jedoch, dass das Problem nur verlagert wurde: bei dieser Lösung müssen nämlich sehr viele Messpunkte zuvor angebracht und hochpräzise in Absolutkoordinaten eingemessen worden sein. Da könnte man mit dem gleichen Aufwand auch direkt die Kamerapositionen vermessen. Besonders nachteilig ist dieser Vorschlag, wenn man im Tunnelbau nicht nach vorne vermessen möchte (da hat man hinten meist Messpunkte), sondern das Tunnelprofil um den Kamerastandort herum, also quer zur Tunnelachse: hier gibt es in der Regel noch keine Messpunkte, sodass diese Art von Vermessung nach diesem Vorschlag überhaupt nicht realisierbar ist.

Ein anderer Vorschlag wird in der DE 297 08 368 U1 gemacht. Dort ist ein Messrahmen vorgesehen, an dem sowohl die Kamera als auch Vermessungsmarken angebracht sind. Auf Grund der Vermessungsmarken lässt sich die Position und die Orientierung des Messrahmens (und damit auch die Position und die Orientierung der Kamera) mittels eines Theodoliten bestimmen. Damit entfällt zwar die aufwändige ortsfeste Anbringung von Vermessungsmarken, es sind aber für eine effiziente Vermessungsarbeit zwei Personen notwendig: eine Person beim Vermessungsrahmen und somit bei der Kamera (diese richtet den Vermessungsrahmen aus und macht die Aufnahmen); und eine zweite Person, die jedes Mal, wenn der Vermessungsrahmen bewegt wurde, dessen Position und Orientierung mit einem Theodoliten vermisst.

In der WO 90/122841 A1 ist ein Theodolit mit servomotorischer Steuerung beschrieben, wobei ein spezielles Verfahren vorgeschlagen wird, auf Grund dessen der Theodolit selbstständig das Ziel suchen und diesem nachfahren kann, wenn es bewegt wird.

Die EP 281 518 A zeigt eine elektronische Kamera, der eine Optik vorgeschaltet, ist, die eine Referenzmarke erzeugt. Durch Vergleich des Bildes der Referenzmarke mit dem Bild des Zieles kann auf die Position des Zieles geschlossen werden.

Es ist Aufgabe der vorliegenden Erfindung, eine Vorrichtung zu schaffen, mit der ein Streckenausbruch von nur einer Person vermessen werden kann, auch dann, wenn hinter der Kamera keine Vermessungspunkte vorhanden sind.

Diese Aufgabe wird durch einen Theodoliten der eingangs genannten Art erfindungsgemäß dadurch gelöst, dass an ihm eine Kamera seitlich befestigt ist, wobei die Kamera gemeinsam mit dem Theodoliten um eine waagrechte und um eine senkrechte Achse schwenkbar ist. Es ist auch möglich, dass an ihm zwei Kameras seitlich gegeneinander versetzt befestigt sind, wobei die Kameras gemeinsam mit dem Theodoliten um eine waagrechte und um eine senkrechte Achse schwenkbar sind.

Durch die Kombination des Theodoliten mit der Kamera wird erreicht, dass alle Tätigkeiten an nur einer Stelle durchzuführen sind, also leicht von einer Person bewerkstelligt werden können. Man verwendet den Theodoliten nicht dazu, um andere Messmarken zu vermessen, sondern um die Position des Theodoliten (und somit der Kamera) an Hand bekannter Messmarken zu ermitteln.

Bei der Ausführung mit zwei Kameras geht man dabei so vor, dass man zunächst mit dem Theodoliten zumindest zwei Zielreflektoren, deren Absolutkoordinaten bekannt sind, einmisst, woraus man die Absolutkoordinaten des Theodoliten und seine Orientierung errechnet, und dass man dann den Theodoliten so verdreht, dass die Kameras auf das zu vermessende Objekt gerichtet sind, wonach man mit den beiden Kameras je eine Aufnahme macht. Da am Theodoliten jeweils feststellbar ist, wie weit er verdreht wurde, ist nicht nur die Position der Kameras, sondern auch die Richtung ihrer optischen Achsen bei der Aufnahme bekannt. Die beiden Fotos können daher nach bekannten Methoden in Absolutkoordinaten ausgewertet werden.

Wie viele Zielreflektoren vermessen werden müssen, hängt davon ab, ob der Theodolit als Totalstation ausgebildet ist, d.h. auch Entfernungen bestimmen kann, oder ob er nur Winkel vermessen kann. Bei Verwendung einer Totalstation kommt man mit zwei Zielreflektoren aus, sonst braucht man zumindest drei.

Bei der Ausführung mit nur einer Kamera geht man so vor, dass man zunächst mit dem Theodoliten zumindest zwei Zielreflektoren, deren Absolutkoordinaten bekannt sind, einmisst, woraus man die Absolutkoordinaten des Theodoliten und seine Orientierung errechnet, und dass man dann den Theodoliten so verdreht, dass die Kamera auf das zu vermessende Objekt gerichtet ist, wonach man die erste Aufnahme macht, und dass man schließlich den Theodoliten samt Kamera um die senkrechte Achse um 180° verdreht und dann um die waagrechte Achse so weit, bis die Kamera wieder in dieselbe Richtung schaut, wonach man die zweite Aufnahme macht, und dass man letztlich die beiden Aufnahmen gemeinsam auswertet. Das Verfahren wird bis zur ersten Aufnahme also ganz analog wie bei zwei Kameras durchgeführt. Dann wird aber durch die 180°-Drehung die Lage der Kamera um den doppelten Abstand Kamera-Drehachse verlagert. Dann stellt man die optische Achse durch Drehung um die horizontale Achse wieder parallel wie bei der ersten Aufnahme und macht das zweite Foto. Insgesamt ergeben sich daher wieder zwei Fotos, die nach bekannten Methoden der Stereofotografie ausgewertet werden.

Es ist leicht erkennbar, dass das Verfahren mit nur einer Kamera zeitaufwendiger ist, allerdings ist auch weniger Investitionsaufwand notwendig.

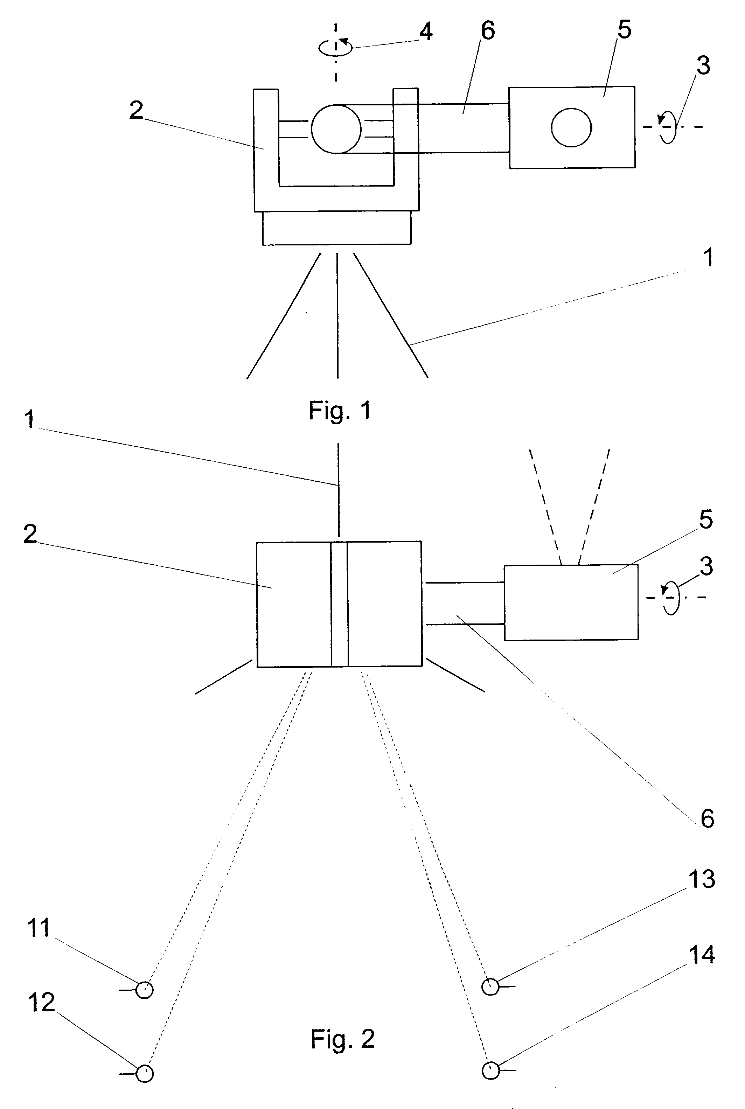

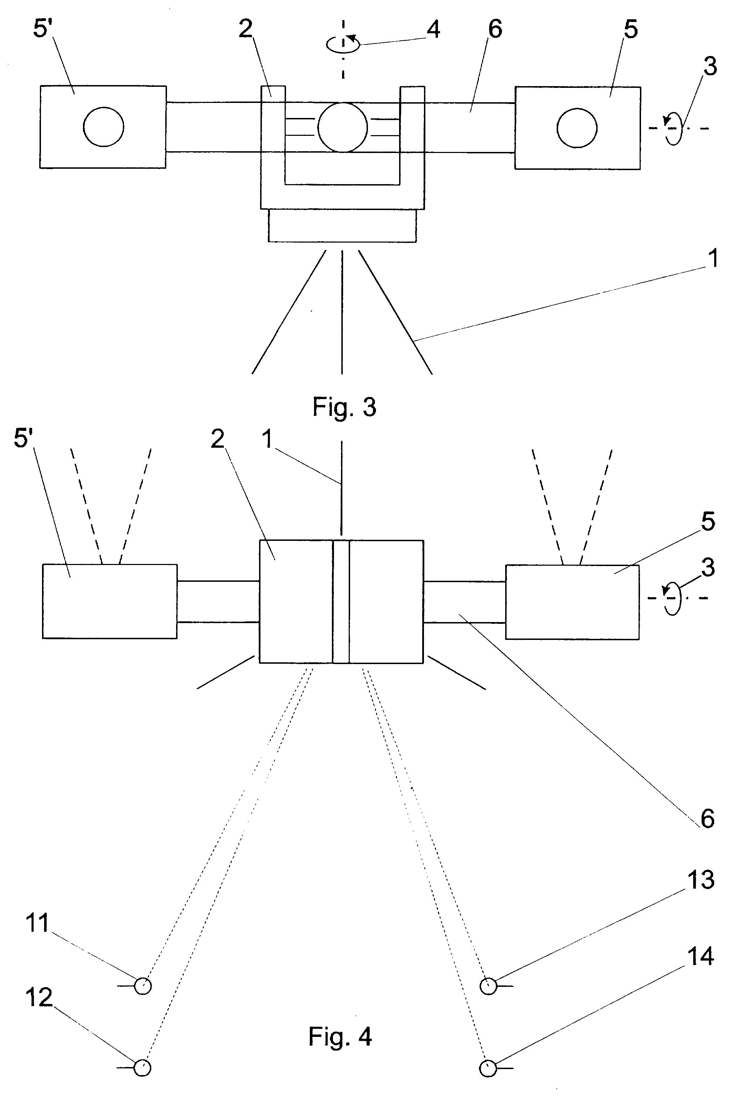

Anhand der beiliegenden Zeichnungen wird die vorliegende Erfindung näher erläutert. Es zeigt: Fig. 1 eine vereinfachte Schemazeichnung der erfindungsgemäßen Vorrichtung mit einer Kamera im Aufriss und Fig. 2 dieselbe im Grundriss; Fig. 3 eine vereinfachte Schemazeichnung der erfindungsgemäßen Vorrichtung mit zwei Kameras im Aufriss und Fig. 2 dieselbe im Grundriss.

Auf einem Stativ 1 (s. Fig. 1 und 2) ist ein Theodolit 2 (der auch ein Streckenmessgerät beinhaltet) angebracht, und zwar eine so genannte Servo-Totalstation, wie sie derzeit am Markt fertig angeboten wird. Solch ein Theodolit lässt sich mit Hilfe von Servomotoren automatisch sowohl um eine waagrechte Achse (Pfeil 3) als auch um eine senkrechte Achse (Pfeil 4) um beliebige Winkel verdrehen. Die jeweilige Winkelstellung ist dabei bekannt, sei es, weil Schrittmotoren zum Einsatz kommen, sei es, weil die Winkelstellung durch Winkelsensoren automatisch ermittelt wird.

An diesem herkömmlichen Theodoliten ist eine CCD-Kamera 5 mittels eines Auslegers 6 starr angebracht. Die CCD-Kamera 5 lässt sich gemeinsam mit dem Theodoliten 2 um die waagrechte (Pfeil 3) und um die senkrechte Achse (Pfeil 4) verdrehen.

Die Vermessung ist mit dieser Vorrichtung sehr einfach: man visiert zunächst zwei Zielreflektoren (in Fig. 2 sind vier dargestellt, nämlich 11,12,13,14) an und bestimmt Richtung und Abstand zu diesen. Da die absoluten Koordinaten der Zielreflektoren 11, 12, 13, 14 bekannt sind, kann man daraus die absolute Position des Theodoliten 2 errechnen.

Nun dreht man den Theodoliten 2 so, dass die CCD-Kamera 5 auf den zu vermessenden Bereich gerichtet ist. Dann macht man die erste fotografische Aufnahme. Nun dreht man den Theodoliten 2 um 180° um seine senkrechte Achse (Pfeil 4), sodass die Kamera 5 auf der gegenüberliegenden Seite des Theodoliten 2 positioniert wird. Nun dreht man den Theodoliten 2 so lange um seine waagrechte Achse (Pfeil 3), bis die CCD-Kamera 5 in die gleiche Richtung schaut wie bei der ersten Aufnahme. Dann macht man die zweite fotografische Aufnahme. Nun hat man die beiden Aufnahmen, die für die Stereofotografie notwendig sind, und kann sie über einen Computer auswerten.

Die im letzten Absatz beschriebenen Schritte werden nun so oft wiederholt, bis die gesamte Fläche, die vermessen werden soll, fotografisch erfasst ist. Dies lässt sich natürlich sehr leicht automatisieren, sodass während der Anfertigung der Fotos keine Bedienungsperson notwendig ist. Diese wird erst wieder benötigt, wenn der Standort gewechselt wird.

Wenn bereits genügend Fixpunkte vorhanden sind, braucht man die Position und Orientierung des Theodoliten nicht unbedingt mittels des Theodoliten zu vermessen. Es ist auch möglich, einfach genügend viele Messpunkte zu fotografieren und durch Auswertung des Fotos Position und Orientierung der Kamera zu bestimmen. In diesem Fall fungiert der Theodolit nur als Winkelmessgerät und als Servoeinrichtung.

Die Vorrichtung in Fig. 3 und 4 unterscheidet sich von der eben beschriebenen nur durch eine zusätzliche Kamera 5', die gegenüber der Kamera 5 vorgesehen ist. Dadurch können die beiden Fotos zugleich gemacht werden, die Drehbewegungen des Theodoliten nach der ersten Aufnahme können entfallen.

Verglichen mit der DE 40 20 035 C1 ergibt sich der Vorteil, dass die Messpunkte (hier: die Zielreflektoren) nicht genau hinter dem zu vermessenden Bereich liegen müssen. Man kann auch dann quer zur Tunnelachse fotografieren, wenn die Zielreflektoren in Richtung Tunnelachse liegen. Außerdem kommt man - wenn eine Totalstation verwendet wird - mit zwei Messpunkten aus.

Verglichen mit der DE 297 08 368 U1 besteht der Vorteil, dass eine Person zur Vermessung genügt, ohne dass zusätzlicher Aufwand für die Geräte notwendig wäre (es genügt ein Theodolit mit einer oder zwei daran befestigten Kameras).

## Patentansprüche

1. Theodolit (2), insbesondere in der Ausführung als Servo-Totalstation, **dadurch gekennzeichnet,** dass an ihm eine Kamera (5) seitlich befestigt ist, wobei die Kamera (5) gemeinsam mit dem Theodoliten (2) um eine waagrechte (Pfeil 3) und um eine senkrechte Achse (Pfeil 4) schwenkbar ist.

2. Theodolit (2), insbesondere in der Ausführung als Servo-Totalstation, **dadurch gekennzeichnet,** dass an ihm zwei Kameras (5,5') seitlich gegeneinander versetzt befestigt sind, wobei die Kameras (5,5') gemeinsam mit dem Theodoliten (2) um eine waagrechte (Pfeil 3) und um eine senkrechte Achse (Pfeil 4) schwenkbar sind.

3. Verfahren zum Vermessen von Objekten, insbesondere des Streckenausbruchs im Tunnelbau, mit einem Theodoliten (2) gemäß Anspruch 1, **dadurch gekennzeichnet,** dass man zunächst mit dem Theodoliten (2) zumindest zwei Zielreflektoren (11,12,13,14), deren Absolutkoordinaten bekannt sind, einmisst, woraus man die Absolutkoordinaten des Theodoliten (2) und seine Orientierung errechnet, und dass man dann den Theodoliten (2) so verdreht, dass die Kamera (5) auf das zu vermessende Objekt gerichtet ist, wonach man die erste Aufnahme macht, und dass man schließlich den Theodoliten (2) samt Kamera (5) um die senkrechte Achse (Pfeil 4) um 180° verdreht und dann um die waagrechte Achse (Pfeil 3) so weit, bis die Kamera (5) wieder in dieselbe Richtung schaut, wonach man die zweite Aufnahme macht, und dass man letztlich die beiden Aufnahmen gemeinsam auswertet.

4. Verfahren zum Vermessen von Objekten, insbesondere des Streckenausbruchs im Tunnelbau, mit einem Theodoliten (2) gemäß Anspruch 2, **dadurch gekennzeichnet,** dass man zunächst mit dem Theodoliten (2) zumindest zwei Zielreflektoren (11,12,13,14), deren Absolutkoordinaten bekannt sind, einmisst, woraus man die Absolutkoordinaten des Theodoliten (2) und seine Orientierung errechnet, und dass man dann den Theodoliten (2) so verdreht, dass die Kameras (5,5') auf das zu vermessende Objekt gerichtet sind, wonach man mit den beiden Kameras (5,5') je eine Aufnahme macht.
